# EUROPEAN PATENT APPLICATION

(11) **EP 2 246 531 A1**
(43) Date of publication of application: **03.11.2010**
(21) Application number: 09159259.2
(22) Date of filing: 30.04.2009
(51) Int. Cl.: F01K 13/00, B01D 3/06, C02F 1/04, C02F 1/16, C02F 1/06, C01D 3/16, F01K 23/10

(54) **Power plant with CO2 capture and water treatment plant**

(71) Applicant: Alstom Technology Ltd, 5400 Baden (CH)
(72) Inventor: Drenik, Olivier, 90 000 Belfort (FR); Breschi, Dario, 90 400 Vezelois (FR)

(57) **Abstract**

A power plant for the generation of electrical energy comprises steam and/or gas turbines (2, 3, 4, 13) driven by fossil fuels and a CO2 capture system (20) for capturing CO2 gases from the flue gases that result from the combustion of the fossil fuels. It furthermore comprises a CO2 gas processing unit (GPU) for the compression and cooling of the captured CO2. A cooling circuit (24) of the gas processing unit (GPU) forms a closed loop that includes a heat exchanger (25) for the heating of brine, where this heat exchanger (25) is part of a water treatment system having a multi-stage flash distiller (MSF). In the closed loop (24) low-temperature waste heat from the CO2 gas processing unit (GPU) is utilized for the water treatment system. The overall power plant energy efficiency is thereby increased.

## Description

### Technical Field

The invention relates to a power plant for the generation of electrical energy having a carbon dioxide capture system. It furthermore pertains to a system for the treatment of water.

### Background Art

It is known that power plants for the generation of electrical energy having gas and/or steam turbines driven by fossil fuels may be equipped with systems for the capture of carbon dioxide from the flue gas resulting from the combustion of the fossil fuels. Power plants with CO2 capture systems can therefore be steam, gas, combined-cycle power plants, where the steam power plants can have all types of boilers including oxy-fired fluidized bed boilers. Such CO2 capture systems include for example systems of absorption or desorption of the CO2 from the flue gases and subsequent compression, cooling, and liquefying of the captured CO2. The process of cooling of the CO2 gases is realized for example by means of heat exchangers using water as a heat exchanging medium. The resulting heated water contains heat that generally is considered as waste heat.

Various systems for the treatment of industrial waste water, sea water, or other non-fresh water are known. For example, filtration-membrane-softening systems are known for the treatment of a given restricted range of turbidity or chemical composition of the water that can be treated and with a limited maximum purity achievable by the filtration. The membrane systems are typically constructed for the filtration of water of a given range of contamination and require significant electrical energy as well as the use of chemicals.

Industrial facilities frequently use evaporation systems for their waste water treatment such as vertical tube, falling film vapor compression type evaporators. They are operated typically either with electrical power or with steam of a pressure above 2 bars abs.

Multi stage flash distillers are known for their use in desalination of sea water.

### Summary of Invention

The object of the present invention is to provide a power plant for the generation of electrical energy comprising steam and /or gas turbines and a CO2 capture and cooling system, where the power plant has improved energy efficiency over conventional power plants.

It is another object of the invention to provide a method of operating such power plant.

A power plant for the generation of electrical energy comprising one or more steam and/or gas turbines driven by fossil fuels and a CO2 capture system for capturing or extracting CO2 gases from the flue gases resulting from the combustion of the fossil fuels and furthermore a unit for the processing the captured CO2, where this unit includes one or more compressors and coolers for the compression and cooling of the captured CO2 gas. According to the invention, this power plant comprises a water treatment system having a multi-stage flash distiller with a first heat exchanger, or brine heater, for heating brine circulating through the MSF. In particular, this first heat exchanger is arranged for a heat exchanging medium to pass through it and thereby heating brine circulating the MSF, where this heat exchanging medium is the cooling medium exiting from the coolers for the cooling of the compressed CO2 gas. This first heat exchanger or brine heater is furthermore configured and arranged such that its heat exchanging medium is directed, after its exit from this first heat exchanger in the multi-stage flash distiller, back to the coolers for the cooling of the CO2 gas. Thereby, a closed loop is formed for the cooling medium for the CO2 coolers.

The heat exchanging medium for the cooling of the compressed CO2 passes through one or more heat exchangers within the processing unit for the CO2. When this heat exchanging medium, for example water, oil or vapor, exits from the cooling unit, its heat content is of low-grade and conventionally considered a low-temperature waste heat. The power plant according to the invention puts this low temperature waste heat to efficient use in a water treatment system, specifically for providing the heat necessary for the operation of a multi-stage flash distiller. The multi-stage flash distiller separates raw feedwater to be treated into two flows, a high purity distillate flow and a low-volume, concentrated brine flow. The distillate may be used, for example, for industrial purposes or for fresh water drinking following a re-mineralization. A part of the brine flow can be either directly disposed to waste or directed to a further unit for reducing it to a solid, for example a zero-liquid discharge crystallizer. Another part of the brine flow is recirculated through the MSF evaporator, where it acts as a cooling medium for the vapor generated by the flashing brine in the MSF flash chambers. The raw feedwater is introduced into the MSF at a stage of the MSF suitable in view of efficient heat recovery.

Power plants with CO2 capture systems typically produce saline water flows generated as process waste by the condensation of flue gas from the boilers. Additionally, such power plants also have a by-product in the form of large amounts of low-temperature heat conveyed by a liquid medium having a temperature typically less than 90 °C, resulting from the CO2 capture equipment such as CO2 coolers or flue gas coolers. Due to its low temperature, this low-temperature heat is generally not utilizable for power generation. However, in the power plant according to this invention, low-temperature heat from the CO2 cooling is recovered in a closed-loop system and exploited as a heat source for the treatment of waste water that is a by-product of same power plant. This waste water can be flue gas condensate or any other industrial waste of same power plant or also any raw water from any external source. As such, the power plant according to the invention has an increased overall energy efficiency over conventional plants.

The power plant with integrated system for a water treatment by distillation according to the invention yields several advantages. The power plant recovers energy otherwise wasted and instead uses it for water purification thereby reducing the energy cost of the water treatment system. The multi stage flash distiller facilitates a high concentration level of the resulting brine, i.e. the concentrated wastewater. This allows in turn further treatment of the brine by means of a crystallizer reducing the brine to solid form, which is disposed of more easily than waste liquid form. Furthermore, the power plant in combination with the water treatment by distillation allows the treatment of water of a greater range of turbidity, salinity, pH values, and contaminants such as organic carbons, for example in comparison to water treatment based on membrane systems. Furthermore, the purity of the resulting distillate is higher than that achievable by a conventional membrane system.

The power plant with a water treatment system according to the invention furthermore is environmentally more compatible in several aspects over conventional water treatment systems. It requires no fresh water intake from the natural environment such as from a river or lake. Compared to conventional water treatment systems it requires a highly reduced consumption of chemicals. The high concentration of the resulting brine and further reduction of the brine to a solid eliminates a disposal or storage of liquid waste. Due to the efficient utilization of the waste heat of the power plant, the final waste heat is released to ambient at reduced temperature.

In an embodiment of the invention, the power plant with CO2 capture system and water treatment system comprises additionally, a second heat exchanger, or feedwater preheater for preheating the waste water to be treated prior to its entry into the multi-stage flash distiller. This second heat exchanger is configured and arranged for a heat exchanging medium that passes through it in counterflow to the raw water or feedwater, which is to be preheated, where the heat exchanging medium results from the CO2 cooling process of the CO2 capture system and has passed through the first heat exchanger or brine heater of the multi-stage flash distiller. After the preheater, the heat exchanging medium is directed back to the CO2 cooling unit of the CO2 capture system. Thereby the closed loop of the cooling medium for the CO2 cooler is again formed. The heat exchanging medium flowing through the second heat exchanger is water or another heat exchanging medium that

The second heat exchanger, or preheater for the raw feedwater to the multi-stage flash distiller, allows the recovery of heat from the closed loop of the CO2 compressor cooling. Moreover, it provides the capability to extend the temperature range of effective waste heat recovery from the CO2 capture system down to a value of 45 °C.

The multi-stage flash distiller, here also referred to as MSF distiller or MSF, integrated with a power plant with CO2 capture facility allows the treatment and purification of water having a greater range of contamination or chemical composition compared to other types of raw water typically treated in an MSF, for example seawater. In the configuration according to the invention and in order to handle this larger range of contamination, the MSF is operated using a set of specifically chosen operating parameters.

In a method of operating the power plant according to the invention, the MSF distiller is operated with operating parameters in the following value ranges. For comparison, the values of operating parameters of conventionally known and operated multi-stage flash distillers are given in parentheses.

Top brine temperature, which is the temperature of the brine at its entry into the first chamber of the MSF after being heating in the first heat exchanger or brine heater:
according to the present invention: 50-70 °C, most suitably 60 °C
(conventional: 90-120 °C) .

Heat source temperature, which is the temperature of the heat source or exchanging medium, preferably water, flowing through the first heat exchanger or through first and second heat exchangers and back to the CO2 coolers. The temperatures given are the temperature of the heat source at the entry into the first heat exchanger and the temperature at its exit from the heat exchanger or heat exchangers:
according to the present invention: 70 °C, 45 °C, (conventional: 130 °C, 100 °C);

The flash range, which is the temperature difference between the temperature of the brine entering the MSF and the temperature of the brine leaving the MSF: according to the present invention: 25-45°C, most suitably 35°, (conventional: 60-80 °C);

The concentration ratio, which is the ratio of the saline concentration of the brine blowdown exiting from the multi-stage distiller to the saline concentration of the raw feedwater to be treated entering the multi-stage distiller: according to the present invention: 10-100, for example 50, (conventional 1.5-2).

### Brief Description of the Drawings

Figure 1 shows schematically a power plant according to the invention comprising a CO2 capture system and a water treatment system with a multi stage flash distiller.
Figure 2a shows schematically and in greater detail a first embodiment of a water treatment system suitable for integration in a power plant of figure 1.
Figure 2b shows schematically and in greater detail a second embodiment of a water treatment system suitable for integration in a power plant of figure 1.
Figure 3 shows schematically a water treatment system suitable for the integration within a power plant of figure 1.

Same numbers for elements of the power plant in different figures indicate the same elements.

### Best Modes for Carrying out the Invention

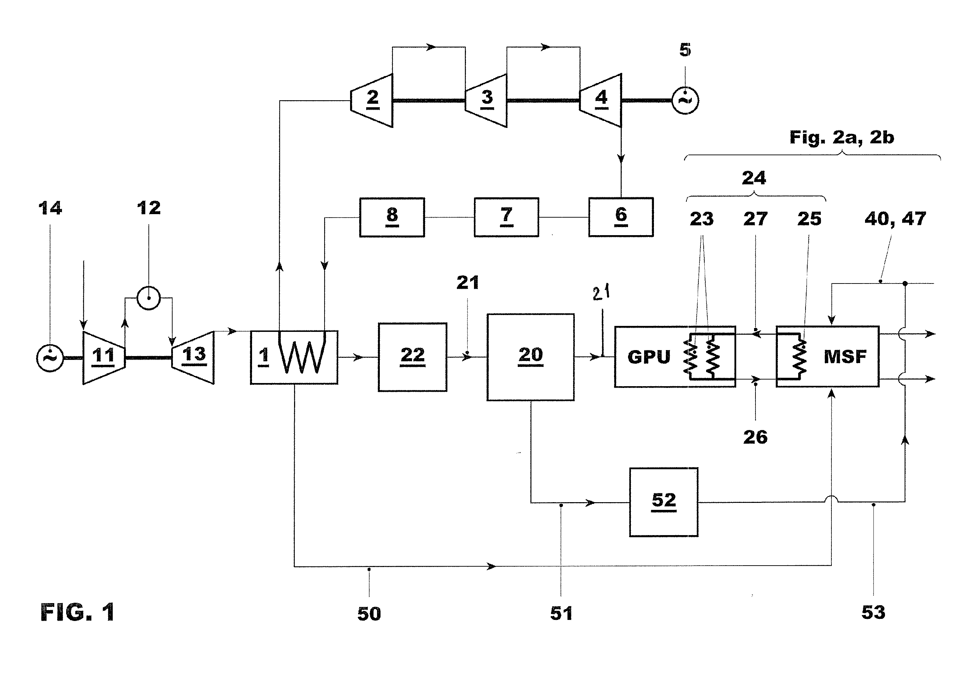

The power plant according to the invention can be any fossil fuel powered plant including a purely steam turbine driven or purely gas turbine driven power plant or a combined cycle power plant comprising both steam and gas turbines. Figure 1 shows a diagram of a combined cycle power plant as an example power plant according to the invention. The power plant for the generation of electrical energy comprises a boiler 1, and high pressure, intermediate, and low pressure steam turbines 2, 3, and 4 respectively driving a generator 5. Following expansion in the turbines the steam is condensed in a condenser 6. The resulting condensate and feed water is degassed and preheated in apparatuses 7 and 8 and directed back to the boiler 1, thereby completing the water-steam-cycle. The power plant further comprises a compressor 11, combustor 12, and gas turbine 13 driving a further generator 14. The flue gases from the gas turbine are directed into the boiler 1, for example a heat recovery steam generator, where the flue gas heat is used for steam generation.

In the case of a purely steam turbine driven power plant, the boiler can also be a coal fired boiler or other fossil fuel fired boilers.

The flue gases exiting from the boiler 1 as shown, or from a coal fired boiler, oxyfired fluidized bed boiler, or any other fossil fueled boiler, are directed for suitable treatment to a flue gas treatment facility 22 and then to a CO2 capture facility 20, for example absorption or thermophysical separation. CO2 gas extracted by this facility is led via a line 21 to a GPU. In the GPU, the CO2 gas is compressed in several stages with inter-coolers or heat exchangers 23 in order to reduce the volume of the CO2 and hence the electrical consumption of the compressors.

The power plant is integrated with a water treatment system in that the heat exchange medium of the gas processing unit GPU is directed in a closed loop cooling system 24 through the gas cooling system 23, GPU and through a shell and tube heat exchanger 25 arranged within a multi stage flash distiller MSF of the water treatment system. Having gained a low-temperature heat from cooling the CO2 gas, it releases this low-temperature heat in the first heat exchanger 25 of the MSF in a counterflow to brine circulating through the MSF. After exiting the heat exchanger 25, it is returned to the heat exchangers 23 of the gas processing unit GPU. This heat exchange medium is most suitably water.

The water from the gas processing unit GPU is heated by heat exchange with the compressed CO2 to a temperature of less than 90 °C. This water is directed via line 26 to the first heat exchanger or brine heater 25 in the MSF for the heating of brine. The brine is heated in the heat exchanger 25 prior to entering the MSF evaporator. The cooling water of the closed loop of the CO2 cooler medium is cooled down at the same time by passing through the heat exchanger 25.

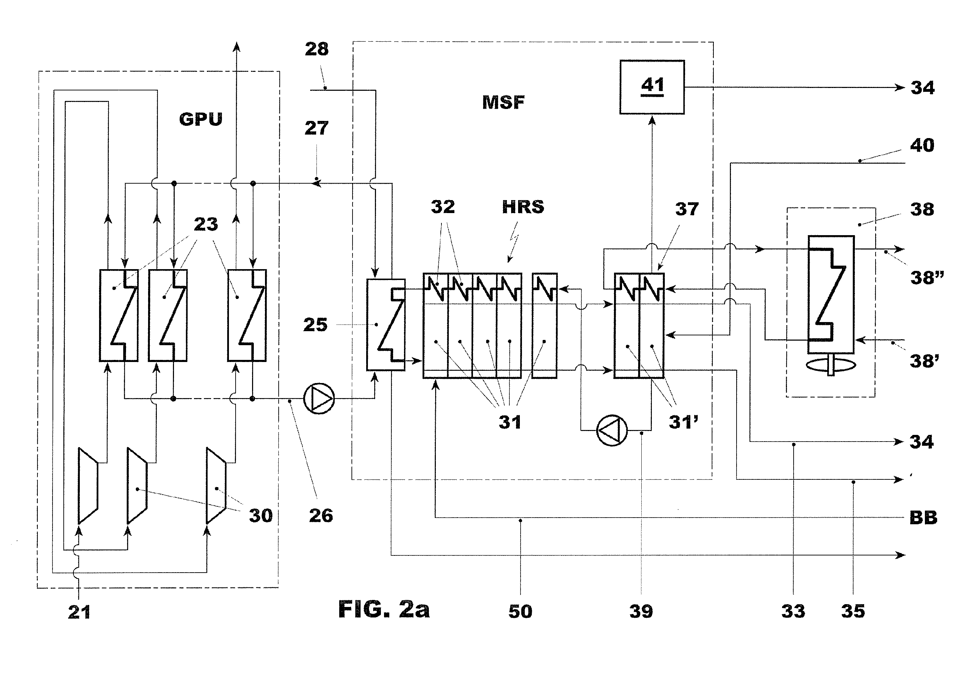

Figure 2a shows in detail the part of the power plant according to the invention concerned with the compression and cooling of the CO2 gas and the integration of the power plant for the generation of electrical energy with the water treatment plant. The plant comprises a compression facility 22 with several compressors 30, the lines for the compressed CO2 gas leading from each compressor 30 to one of several heat exchangers or intercoolers 23 of the gas processing unit GPU. The first heat exchanger 25 or brine heater of the MSF is connected on the side of the heating medium flowing through its shell to the heat exchangers 23 of the GPU via lines 26 and 27. On the side of the brine flowing through the heat exchanger tubes, the heat exchanger 25 is part of the main circuit of the MSF evaporator. It effectively uses the low-temperature heat from the cooling unit GPU for the heating of the brine to be distilled. The MSF further comprises a heat recovery section HRS having several chambers or stages 31 of flash distillers arranged in series, where the brine flashes at the bottom of each stage 31 and 31' of the MSF evaporator. The evaporator includes a heat recovery section HRS and a heat reject section 37. The brine heated in heat exchanger or brine heater 25 is led into the first flash chamber 31, where the pressure is kept by thermodynamic equilibrium at a value to allow flashing of the incoming brine, such that it partially vaporizes. The vapor rising to the top of each flash chamber 31, condenses on exchanger tubes 32 in the form of distillate. The process of flashing, partial evaporation, and condensation repeats at decreasing temperatures and pressures in all the stages 31 of the heat recovery section HRS and stages 31' of the heat reject section 37. The distillate of each stage is collected in pans and led via a line 33 to a distillate tank 34. At the bottom of the flash distiller stage chambers 31, the non-evaporated contaminants of the brine are collected and led via line 35 to further treatment.

The MSF comprises the heat reject system 37 containing further flash evaporation chambers 31' and condensing tubes for condensing the vapor. These condensing tubes have a cooling medium flowing through them that is circulated in a closed loop through an air cooler 38 having air inlet and air outlet lines 38' and 38". Most of the flashed brine, is extracted from the very last flash chamber 31' of the heat reject system 37 by means of a brine recirculation pump and led to the MSF via line 39 to the condensing tubes 32 of the flash chambers 31 of the heat recovery section HRS. There the brine acts as a cooling medium for the vapor generated in the flash chambers 31.

A part of the brine is extracted from the last chamber of the MSF by a separate pump and discharged via line 35 as blowdown in order to keep a constant concentration of the recirculating brine, which is recirculated via line 39 to the heat recovery section HRS of the MSF.

Non-condensable gases are extracted from the heat reject system 37 via a vacuum system 41.

Feedwater is introduced via a line 40 at a suitable stage of the MSF evaporator depending on the temperature of the feedwater. In the shown embodiment, the feedwater line is introduced into the heat reject section 37 of the MSF. A deaereator could be provided upstream of the MSF evaporator in order to separate the air dissolved in the feed water.

A low-pressure steam line 28 leads into the first heat exchanger 25 in order to allow the introduction of low-pressure steam into the heat exchanger at times of start-up of the system and/or during transient conditions.

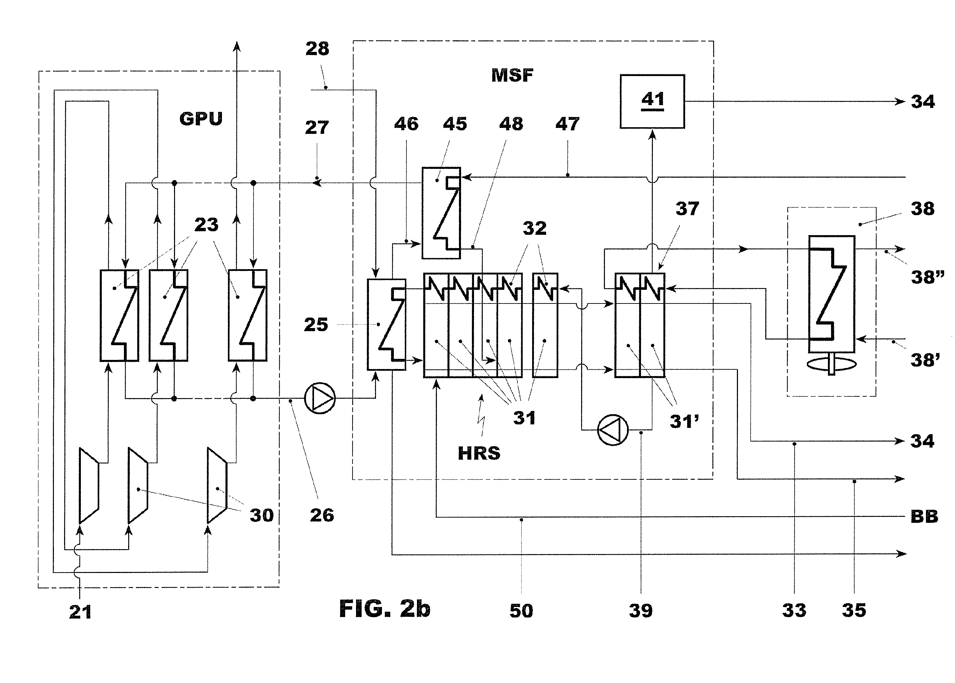

A further embodiment of the invention regarding the introduction of feed water into the water treatment system is shown in figure 2b. The system is based on the same principles as that of figure 2a. In comparison to the system of figure 2a, it comprises additionally a second heat exchanger 45 for the preheating of the feedwater to be treated. The preheater 45 is a shell and tube heat exchanger having on its shell side water or another heat exchanging medium flowing through its shell that is delivered from the heat exchanger 25 via line 46. After having passed through the second heat exchanger 45, the heat exchanging medium, preferably water, is directed by line 27 back to the coolers 23 of the gas processing unit GPU. Thereby the loop 24 is closed. On its tube side the heat exchanger 45 has feed water delivered by line 47 led through it for preheating. The second heat exchanger or feedwater preheater 45 facilitates a further recovery of remaining heat available in the cooling medium of the CO2 gas cooling system and thus allows further optimization of the energy efficiency of the power plant.

A line 48 directs the feed water after its preheating to a suitable stage 31 of the MSF evaporator.

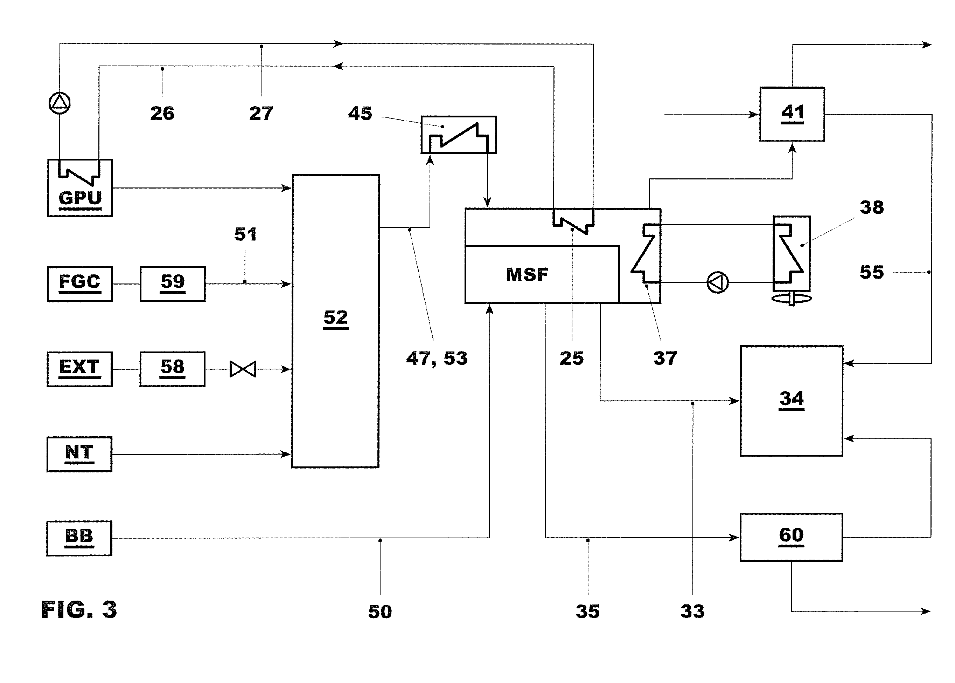

Figure 3 illustrates schematically a full scheme of possible sources of raw feed water to be treated by the water treatment system integrated in a power plant according to the invention. Any combination of the shown sources as well as further similar sources are possible. The sources presented in figure 3 include the boiler blowdown that is delivered by a line 50 to the MSF and the flue gas condensate delivered from the CO2 capture facility 20 via a line 51 to a raw water tank 52, from where a line leads to a feed water line 40 or 47. The figure shows the MSF distiller that receives raw feedwater from two sources, one from the boiler blowdown BB via line 50 and the other from line 53 delivering raw water from a raw water tank 52, which has the purpose of levelizing the feed water delivery to the distillation. The raw water tank 52 can be filled via one or more of the following sources: water from a neutralization tank NT containing industrial waste water; water from an external source EXT such as a pond, lake or other similar source. This water may be pretreated in a facility 58 in order to remove by sedimentation most of the suspended matter or modify its pH value according to the actual characteristics; flue gas condensate FGC may be pretreated in a treatment facility 59 in order to oxidize CaS03 to CaS04 having higher solubility.

In the embodiments of both figures 2a and 2b, the MSF is connected to an air cooler 38 having air inlet line 38' and air outlet line 38" for the cooling of the cooling medium in the condensing tubes of the heat reject system 37.

A line 33 to a distillate tank 34 directs the distilled water generated by the MSF. Further distillate collected in the vacuum system 41 may also be delivered via line 55 to this tank 34.

The brine from the MSF or brine blowdown is delivered by line 35 to a zero liquid discharge crystallizer 60, where it is processed to be reduced to solid crystalline form. These solids are then to be disposed of as waste. The zero liquid discharge crystallizer 60 may comprise a crystallizer, a heat recovery heater for the incoming brine and a mechanical vapor compressor. Any distilled liquid discharge arising from the solidification process may also be collected in the distillate tank 34.

Terms used in Figures
- 1: boiler
- 2: HP steam turbine
- 3: intermediate pressure steam turbine
- 4: low pressure steam turbine
- 5: generator
- 6: condenser
- 7, 8,: degassing, preheating apparatus
- 11: compressor
- 12: combustor
- 13: gas turbine
- 14: generator
- 20: CO2 capture facility
- 21: line for CO2 gas
- 22: flue gas treatment facility, upstream Co2 capture facility 20
- 23: heat exchanger, CO2 gas cooler
- 24: closed-loop cooling system
- 25: first heat exchanger within MSF (brine heater)
- 26: line to heat exchanger 25
- 27: line back to cooling heat exchanger within GPU
- 28: low pressure steam line to first heat exchanger
- 30: compressors
- 31: series arranged flash distiller chambers in heat recovery section HRS of the MSF
- 31': series arranged flash distiller chambers in heat reject section 37 or the MSF
- 32: condensing tubes
- 33: line for distillate
- 34: distillate tank
- 35: line for brine blowdown
- 37: heat reject section
- 38: air cooler
- 38': air inlet line
- 38": air outlet line
- 39: line for recirculating brine
- 40: feed water line
- 41: vacuum system
- 45: feedwater preheater
- 46: line to second heat exchanger or feedwater preheater
- 47: feedwater line to second heat exchanger or preheater
- 48: line from second heat exchanger to HRS of MSF
- 50: line for boiler blowdown
- 51: line for flue gas condensate
- 52: raw water tank
- 53: line for raw feedwater
- 55: line for distillate
- 58, 59: pre-treatment facility
- 60: zero liquid discharge crystallizer

- GPU: gas processing unit
- HRS: heat recovery section
- FGC: flue gas condensate
- BB: boiler blowdown
- EXT: external water source
- NT: neutralization tank
- MSF: multi stage flash distiller

## Claims

1. Power plant for the generation of electrical energy comprising one or more steam turbines (2, 3, 4) or one or more gas turbines (13) or both, which are driven by fossil fuels, the power plant further comprising a CO2 capture system for capturing CO2 gases from the flue gases that result from the combustion of the fossil fuels and a unit (GPU) for processing the captured CO2 having one or more compressors (30) and one or more coolers (23) for the compression and cooling of the CO2 **characterized in that**
the power plant comprises a water treatment system having a multi-stage flash distiller (MSF) with a first heat exchanger (25) for the heating of brine flowing through the water treatment system, where the first heat exchanger (25) is configured and arranged for a heat exchanging medium to pass through it, where this heat exchanging medium results from the one or more coolers (23) for the cooling of the CO2 gas and after its exit from the first heat exchanger (25) the heat exchanging medium is directed back to the one or more coolers (23) for the cooling of the CO2 gas.

2. Power plant according to claim 1
**characterized in that**
the power plant with CO2 capture system with integrated water treatment system additionally comprises a second heat exchanger (45), where the second heat exchanger (45) is configured and arranged for the preheating of raw feedwater prior to its entry into the MSF distiller and for a heat exchanging medium, which results from the one or more coolers (23) for the cooling of the CO2 gas and from the first heat exchanger (25) of the multi-stage flash distiller (MSF), where this heat exchanging medium is directed, after its exit from the second heat exchanger (45), back to the one or more coolers (23) for the cooling of the CO2 gas.

3. Power plant according to one of the foregoing claims
**characterized in that**
the heat exchanging medium resulting from the coolers (23) for the cooling of the CO2 gas has a temperature less than 90 °C at its entry into the first heat exchanger (25).

4. Power plant according to one of the foregoing claims
**characterized in that**
the multi-stage flash distiller (MSF) is configured and arranged to separate raw feedwater to be treated into a distillate flow and a brine flow.

5. Power plant according to one of the foregoing claims
**characterized in that**
the power plant further comprises a unit for reducing the brine flow to a solid.

6. Power plant according to claim 5
**characterized in that**
said unit is a zero-liquid discharge crystallizer (60).

7. Power plant according to one of the foregoing claims
**characterized in that**
water flow directed to the multi-stage flash distiller (MSF) is waste water from the power plant, sea water, and/or raw water from an external source.

8. Power plant according to one of the foregoing claims
**characterized in that**
a deaereator is provided in the line (40, 53, 47) for the raw feedwater upstream of the multi-stage flash distiller (MSF) evaporator .

9. Power plant according to one of the foregoing claims
**characterized in that**
a line (28) for low-pressure steam leads into the first heat exchanger (25).

10. Power plant according to one of the foregoing claims
**characterized in that**
the heat exchanging medium flowing through the first heat exchanger (25) or first and second heat exchangers (25, 45) is water, oil, or vapor.

11. Method of operating a power plant according to one of the foregoing claims 1-10
**characterized in that**
a ratio of the saline concentration of the brine blowdown exiting from the multi-stage distiller (MSF) to the saline concentration of the raw feedwater entering the multi-stage distiller (MSF) is in the range from 10 to 100.

12. Method of operating a power plant according to claim 11
**characterized in that**
the ratio of the saline concentration of the brine blowdown to the saline concentration of the raw feedwater to be treated is 50.

13. Method of operating a power plant according to claim 11 or 12
**characterized in that**
a temperature of the brine at its entry into the first chamber (31) of the multi-stage distiller (MSF) after being heating in the first heat exchanger (25) is in the range from 50 to 70 °C,
and a heat source temperature of the heat exchanging medium flowing through the first heat exchanger (25) or through the first and second heat exchangers (25, 45) is 70°C at its entry into the first heat exchanger (25) and 45°C at its exit from the first heat exchanger (25) or second heat exchanger (45),
and the temperature difference between the temperature of the brine entering the multi-stage distiller (MSF) and the temperature of the brine leaving the multi-stage distiller (MSF) is in the range from 25 to 45°C.

14. Method of operating a power plant according to one of the claims 11 to 13
**characterized in that**
the temperature of the brine at its entry into the first chamber (31) of the multi-stage distiller (MSF) after being heating in the first heat exchanger (25) is 60 °C, and the heat source temperature of the heat exchanging medium flowing through the first heat exchanger (25) or through the first and second heat exchangers (25, 45) is 70°C at its entry into the first heat exchanger (25) and 45°C at its exit from the first heat exchanger (25) or second heat exchanger (45),
and
the temperature difference between the temperature of the brine entering the multi-stage distiller (MSF) and the temperature of the brine leaving the multi-stage distiller (MSF) is 35°.
